# EUROPEAN PATENT APPLICATION

(11) **EP 1 489 856 A2**
(43) Date of publication of application: **22.12.2004**
(21) Application number: 04006418.0
(22) Date of filing: 17.03.2004
(51) Int. Cl.: H04N 9/82

(54) **Video recording and reproducing apparatus and method**

(30) Priority: 30.05.2003 JP 2003155938
(71) Applicant: Kabushiki Kaisha Toshiba, Tokyo (JP)
(72) Inventor: Omokawa, Mitsunori c/o Toshiba Corporation, Minato-ku Tokyo 105-8001 (JP); Oku, Tadahiro c/o Toshiba Corporation, Minato-ku Tokyo 105-8001 (JP)
(74) Representative: Henkel, Feiler & Hänzel

(57) **Abstract**

A video recording and reproducing apparatus (1) according to the present invention is characterized by a hard disk device (9) and a DVD-RAM drive (8) which records a video signal and management information for the video signal in a recording medium and an MPU (18) which senses that a vertical blanking interval of an inputted video signal contains a WSS signal that may be outputted to an effective video area and in that if the MPU detects the containment of the WSS signal, the MPU records intrinsic information indicative of the containment of the WSS signal in a management information recording area of the recording medium.

## Description

The present invention relates to a video recording and reproducing apparatus that can record and reproduce videos broadcast by a broadcasting satellite or a communication satellite or using an electric wave in a VHF band or a UHF band, and in particular, to a video recording and reproducing apparatus in conformity with a DVD-VR standard.

Television apparatuses are commonly used as display apparatuses that display videos.

Widely employed television systems include an NTSC system mainly employed in Japan and other Asian areas and using 525 scanning lines and a PAL system that is a 625/50 line system mainly employed in Europe.

With the PAL system, WSS (Wide Screen Signaling information) may be superimposed on VBI (Vertical Blanking Interval).

For the WSS, aspect information, subtitles, copy control information, and the like are specified. These pieces of information are set for a line 23 that is an effective video line.

The following 11 publications propose a technique used if the signal (WSS) superimposed on the VBI is recorded in a digital medium such as an optical disk, to detect the signal superimposed on the VBI and record it in an area in which the aspect information and copy control information are set: Jpn. Pat. Appln. KOKAI Publication No. 2001-86444, Jpn. Pat. Appln. KOKAI Publication No. 2001-86455, Jpn. Pat. Appln. KOKAI Publication No. 2001-86463, Jpn. Pat. Appln. KOKAI Publication No. 2001-86464, Jpn. Pat. Appln. KOKAI Publication No. 2001-86465, Jpn. Pat. Appln. KOKAI Publication No. 2001-86466, Jpn. Pat. Appln. KOKAI Publication No. 2001-197417, Jpn. Pat. Appln. KOKAI Publication No. 2001-197418, Jpn. Pat. Appln. KOKAI Publication No. 2001-197441, and Jpn. Pat. Appln. KOKAI Publication No. 2001-197442 (these are divisional applications from the same basic application).

Since the WSS disclosed in the above 11 publications is superimposed on the line 23, which is an effective video line, this signal is recorded directly as a video signal in MPEG2, which is a standard format used to record videos and sounds using digital signals.

Thus, if this signal is outputted directly to a television receiver (a monitor apparatus) that is not adapted for the WSS, then disadvantageously a white line (an unwanted image) may be displayed in an effective video line at the top of a display image.

Another problem is that when a signal recorded as a wide signal (an aspect ratio of 16:9) is reproduced in a letter size, the above white line may occur near the center of the display screen.

An aspect of the invention, there is provided to a video recording and reproducing apparatus.comprising: a signal receiving section which receives a video signal or an audio signal; an encode section which encodes the video signal or the audio signal received by the signal receiving section into a predetermined form; a recording device which records the video signal and management information for the video signal in a recording medium; a control information signal detecting device which detects that a vertical blanking interval of the video signal received by the signal receiving section contains a control information signal that may be outputted to an effective video area; and a recording control device which operates if the control information signal detecting device detects containment of the control information signal, to set a flag indicative of the containment of the control information signal in a predetermined area of a management information recording area of the recording medium.

An aspect of the invention, there is provided to a video recording and reproducing apparatus comprising: a signal receiving section which receives a video signal or an audio signal; an encode section which encodes the video signal or the audio signal received by the signal receiving section into a predetermined form; a recording device which records the video signal and management information for the video signal in a recording medium; a control information signal detecting device which detects that a vertical blanking interval of the video signal received by the signal receiving section contains a control information signal that may be outputted to an effective video area; and a recording reservation information retaining section which retains recording reservation information including a start and end of recording of the video signal in the recording medium as well as recording conditions which recording is executed by the recording device as well as recording conditions; and a recording control device which operates if the control information signal detecting device detects containment of the control information signal when a main power supply is turned on by the recording reservation information retaining device, to set a flag indicative of the containment of the control information signal in a predetermined area of a management information recording area of the recording medium.

An aspect of the invention, there is provided to a video recording method comprising: detecting a vertical blanking interval of a video signal received by the signal receiving section contains a control information signal that may be outputted to an effective video area; and if it is detected that the vertical blanking interval of the received video signal contains the control information signal, setting a flag indicative of the containment of the control information signal in a predetermined area of a management information recording area of the recording medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating an example of the configuration of a video recording and reproducing apparatus to which an embodiment of the present invention is applied;
FIG. 2 is a schematic diagram illustrating a DVD-VR (DVD Video Recording) standard required to record recording data utilized in the video recording and reproducing apparatus shown in FIG. 1;
FIG. 3 is a schematic diagram illustrating the DVD-VR (DVD Video Recording) standard required to record recording data utilized in the video recording and reproducing apparatus shown in FIG. 1;
FIG. 4 is a flow chart illustrating an example of operations performed to record a video using a DVD-VR format; and
FIG. 5 is a flow chart illustrating an example of operations performed to reproduce a video using the DVD-VR format.

An embodiment of the present invention will be described below with reference to the drawings.

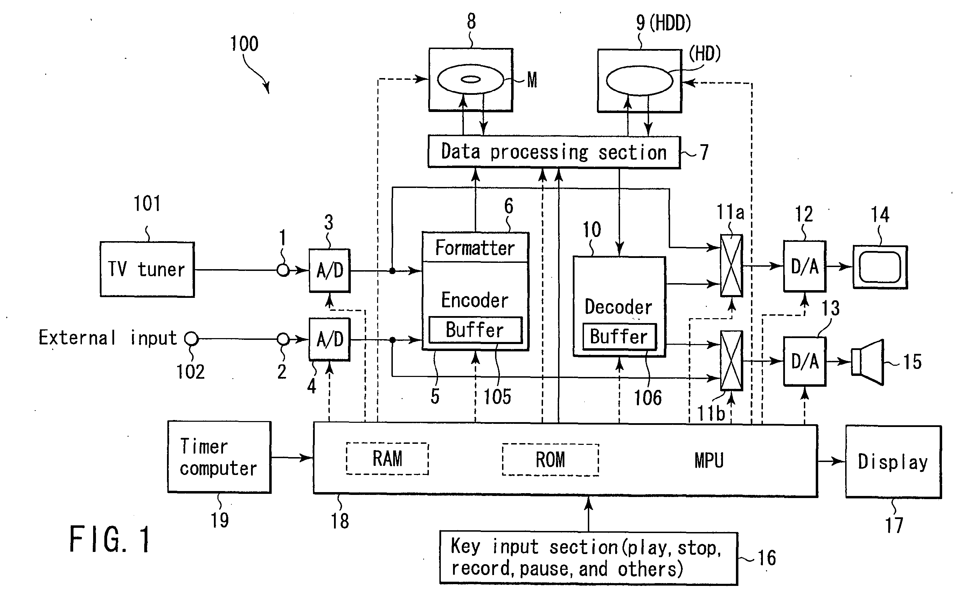

FIG. 1 is a block diagram illustrating an example of the configuration of a video recording and reproducing apparatus to which an embodiment of the present invention is applied.

In FIG. 1, a video recording and reproducing apparatus 100 has a TV tuner 100 that selectively receives space transmission as radio wave, i.e., broadcasting signal wave of a predetermined channel broadcast by a broadcasting satellite or a communication satellite or using an electric wave in a VHF band or a UHF band, and an external input terminal 102 to which video signals and audio signals can be inputted.

A video signal and an audio signal inputted through the television tuner (signal receiving section) 101 or the external input terminal (signal receiving section) 102 are received to a video analog-digital (A/D) converting circuit 3 and an audio analog-digital (A/D) converting circuit 4, respectively, via a video input section 1 and an audio input section 2, respectively. The converting circuits convert the analog video and audio signals into a video digital signal and an audio digital signal, respectively.

A video digital signal and an audio digital signal are inputted to a buffer memory 105 of an encoder 5. The signals are then subjected to predetermined signal processing in accordance with an instruction (control command) from an MPU 18, described later. By way of example, the video digital signal is encoded into compressed video data in conformity with, for example, an MPEG2 standard. The audio digital signal is encoded into compressed audio data in conformity with, for example, AC3 or MPEG2. The compressed video data and compressed audio data are converted by an encoder 5 into an MPEG2 system layer.

The signals from the encoder 5 are converted by a formatter 6 into a format specified in a DVD recording standard (DVD-RAM, DVD-RW, or the like).

The signals having their format converted by the formatter 6 are converted by a data processing section 7 into recording data containing commands in conformity with a DVD-RAM drive 8 or a hard disk drive (HDD) 8. The data is then recorded in a DVD-RAM disk M preset in a DVD-RAM drive 8 or in a hard disk (HD). A data processing section 7 is mainly composed of a buffer circuit. The data processing section 7 also functions as a disk controller in transferring recording data between the HDD 9 and the DVD-RAM drive 8, recording the recording data in the HDD 9 or the DVD-RAM drive 8, or reading data from the hard disk HD or the DVD-RAM disk M, set in the DVD-RAM drive 8.

In the video recording and reproducing apparatus 100, in addition to the data obtained by the format conversion executed by the formatter 6, reproduction management information created by the MPU 18 is recorded in the DVD-RAM disk or the hard disk (HD) via the data processing section 7. The MPU 18 can edit a plurality of programs recorded in the DVD-RAM disk M or the hard disk (HD).

For example, already recorded programs (recording data) can be deleted or reproduced for edition using a method dealing with an already published DVD format (this method is not described in detail). In this case, the MPU 18 modifies management information corresponding to the recording data. The data processing section 7, for example, copies, moves, and deletes the recording data.

When data recorded in the DVD-RAM disk M or the hard disk (HD) is reproduced, the data read from the DVD-RAM disk M or the hard disk (HD) is inputted to the data processing section 7. An output (read output) from the data processing section 7 is inputted to a decoder 10.

The read output inputted to the decoder 10 is decoded from the DVD format. Specifically, the decoder 10 mainly has a separating section that separates the read data of the DVD format into video data and audio data and a section that decodes the compressed video data and compressed audio data separated from each other. The vide data is decoded from the MPEG2 format, and the audio data is decoded from the MPEG, AC3, or the like.

The decoded video and audio data are outputted to selectors 11a and 11b, respectively.

The video data outputted by the selector 11a is converted by a video D/A converting circuit 23 into a video analog signal. The signal is then outputted to a monitor device (a display) 14 or a video input section of the television receiver. The audio data outputted by the selector 11b is converted by an audio D/A converting circuit 13 into an audio analog signal. The signal is then inputted to a speaker 15 or an audio input section of the television receiver.

In addition to the operations described above, the MPU 18 performs an operation of receiving a user command from a key input section 16 and controlling the operations of individual circuits or units of the video recording and reproducing apparatus 100. The MPU 18 includes a RAM that temporarily retains inputted commands, parameters, and the like and a ROM in which control programs and the like are stored, in order to enable inputting of operations of the video recording and reproducing apparatus 100, for example, recording start (REC), image reproduction (PLAY), (recording and reproduction) stop (STOP), and skip (SKIP), inputting of a time setting/reserved time (HOUR, MIN, DAY, MONTH), inputting of reservation conditions (RATE, MODE, HDD, DISK), inputting of a control signal corresponding to reset (COUNTER RESET) or the like, turning on/off of the main power supply, and the like. The MPU 18 thus controls operations of the whole system, accepts user commands, displays the present state, or detects the DVD format in accordance with the control programs.

Furthermore, a timer computer 19 is connected to the MPU 18. The timer computer 114 turns on a main power supply at a preset time or a predetermined time before the preset time even if a main power supply circuit (not shown) of the video recording and reproducing apparatus 100 is off. The timer computer 114 thus causes each section of the main body of the apparatus 100 to stand by and get ready for recording before reserved recording is started. For example, when the reserved time is reached, the timer computer 19 sets broadcasting (a program) of a reserved channel under preset recording conditions to enable the reserved recording of videos and sounds.

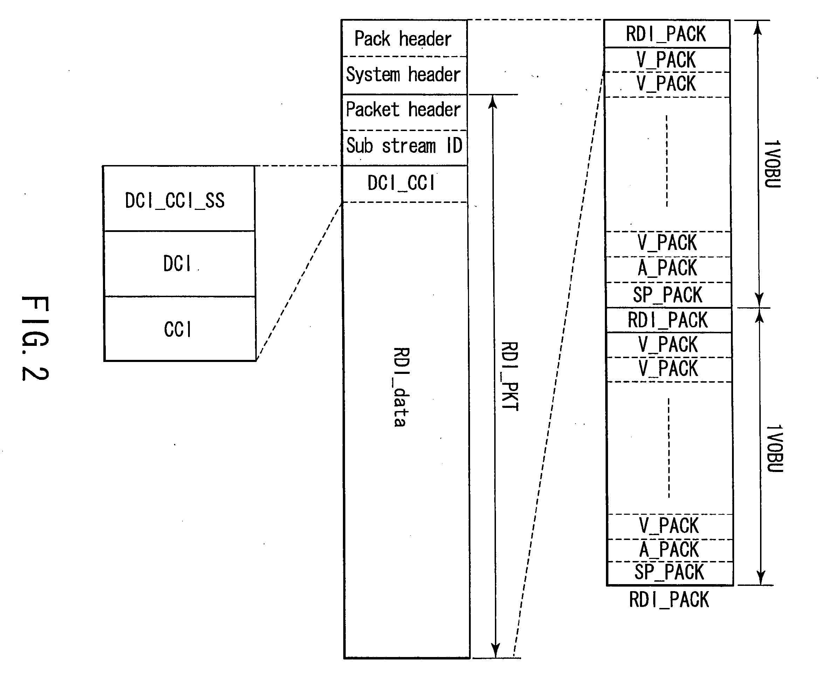

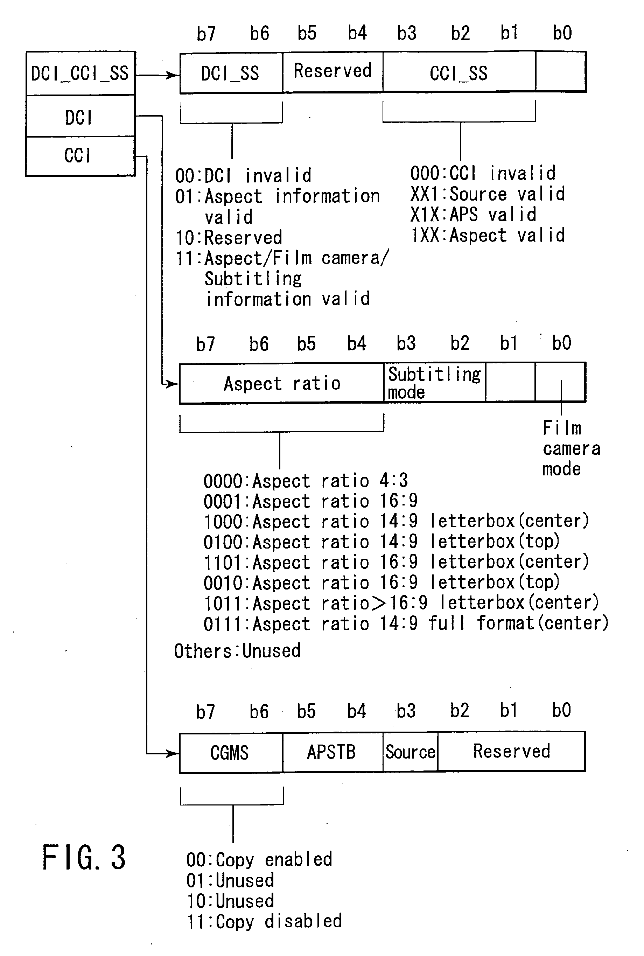

FIGS. 2 and 3 are schematic diagrams illustrating a DVD-VR (DVD Video Recording) standard required to record recording data utilized in the video recording and reproducing apparatus shown in FIG. 1.

According to the DVD-VR standard, data is managed using a VRO file (VR_MOVIE. VRO) in which actual data for motion pictures is recorded and an IFO file (VR_MANGR. IFO) in which management information such as a recorded position of the data and title information is recorded (there is also a file for still images but its description is omitted in the present proposal).

Information on motion pictures and sounds is recorded in the VRO file using an MPEG2 program stream system. If a plurality of recording operations (recording of information) are performed, then after the first data has been recorded, the second data is recorded in the same file.

In this manner, a plurality of recording data are recorded in the same file. Accordingly, the IFO (information) file is provided to manage individual recording data. According to the DVD-VR standard, motion picture data created by a single recording operation is called M_VOB (Movie Video Object). The IFO file indicates where in the file each M_VOB is recorded. This area of the IFO file is called M_VOBI (Movie Video Object Information).

Now, a video object (VOB) will be described with reference to FIG. 2.

The VOB is stored in the above described video file called the VR_MOVIE. VRO file.

The video file has a hierarchical structure and is composed of one or more VOBs (Video OBjects). One VOB is composed of one or more VOBUs (Video OBject Units). One VOBU is composed of a plurality of packs. The plurality of packs include an RDI pack, a V (Video) pack, and an A (Audio) pack. A sub-video pack (SP pack) may be present.

The RDI pack is called a unit control information pack or a navigation information pack or a real time data information pack (RDI_PACK).

This pack contains information indicative of a start time when the first field of the VOBU to which the pack belongs is reproduced, information indicative of a time when the VOBU is to be recorded, and manufacturer information (MNFI). The pack also contains display control information (DCI) and copy control information (CCI).

The display control information is indicative of aspect ratio information, subtitle mode information, and film camera mode information.

The copy control information (CCI) includes copy enable information (0, 0) or copy disable (prohibition) information (1, 1).

The V pack is video data compressed using the MPEG2 system. The V pack is composed of a pack header, a packet header, and a video data section.

The A pack is audio data encoded using, for example, a linear PCM system, the MPEG system, or the AC3 system. The A pack is composed of a pack header, a packet header, and an audio data section.

The management information is stored in the above described management information called the VR_MANGR. IFO. The management information is called a video manager (VMG) and a program chain (PGC) is defined in the management information to manage the order of data reproduction. Cells are defined in the PGC.

The PGC describes and specifies the order of a plurality of cells. Each of the cells defines video object information (VOBI) on a video object (VOB) to be reproduced.

Specific information on the PGC is recorded in program chain information (PGCI). The PGCI is divided into original PGCI (ORG_PGCI) and a user defined PGC table (UD-PGCIT).

Normally, the original PGCI is created during recording. The user defined PGC table (UD_PGCIT) is created as management information known as a play list when the video object managed by the original PGC is edited (deletion, addition, or decimation).

The RDI pack shown in FIGS. 2 and 3 has flags for the aspect information (DCI) and copy control information (CCI). If WSS (Wide Screen Signalling information) is detected, it is described in these pieces of information.

Flags inherent in the WSS includes the MSB of DCI_SS and a Subtitle and Film Camera Code flags in the DCI data as shown in FIG. 3.

With the PAL system, the WSS (Wide Screen Signalling information) may be superimposed on the VBI (Vertical Blanking Interval).

Accordingly, if a television receiver (a monitor apparatus) connected to the video digital-analog converting circuit 12, previously described with reference to FIG. 1, is not adapted for the WSS, then disadvantageously a white line (an unwanted image) may be displayed in an effective video line at the top of a display image on the television receiver (monitor apparatus).

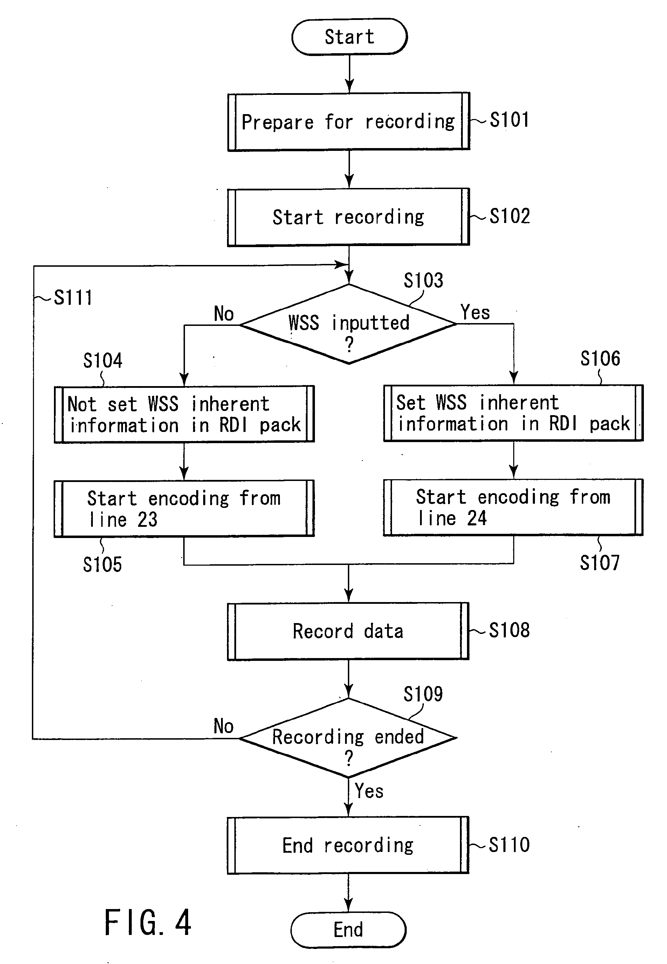

According to the present invention, when a video signal containing WSS is reproduced, a WSS component is inhibited from being reproduced in an effective image area of a display device. The present invention has characteristics such as those shown in FIG. 4.

FIG. 4 is a flow chart illustrating an example of operations performed to record a video using the DVD-VR format.

When a user instructs the apparatus to start recording, various parameters are set to prepare for recording (S101). The encoder 5 in FIG. 1 is caused to start recording (S102).

Then, it is detected whether or not the WSS signal is superimposed on the VBI (S103). If the WSS is not detected (S103-No), a setting inherent in the case in which the WSS is superimposed is not added to the RDI pack (S104). For example, the DCI_SS in FIG. 3 is set in 01(b). Specifically, the 01(b) flag is set in the DCI_SS to indicate that the WSS is not superimposed.

Then, the video signal starts to be encoded from a line 23 (S105). The encoded data is recorded in a recording medium, for example, the hard disk (HD) or the DVD-RAM disk M (S108).

If the WSS is detected (S103-Yes), the setting inherent in the case in which the WSS is superimposed on the VBI is added to the RDI pack (S106). For example, the DCI_SS in FIG. 3 is set in 11(b). Specifically, the 11(b) flag is set in the DCI_SS to indicate that the WSS is superimposed.

If it is detected that the aspect information of the DCI is indicative of a ratio other than 4:3 and 16:9, then that value is set. If a subtitle mode or a frame camera mode is detected, a predetermined DCI flag is set.

Then, the video signal starts to be encoded from a line 24 (S107). The encoded data is recorded in a recording device (S108). The line to which the image is outputted can be easily changed by, for example, switching the output between the data for the line 23 and the data for the line 24 when outputting (transferring) the data from the buffer 105 of the encoder 5 to the data processing section 7 or from the data processing section 7 to the hard disk (HD) or DVD-RAM disk M.

Subsequently, it is determined whether or not an end signal has been inputted using a key input or a remote controller or the like (not shown) (S109). If it can be detected that the end command has been inputted, the recording is ended (S110).

If the recording is continued (S111), it is detected again whether or not the WSS signal has been inputted. It is thus determined whether or not the WSS has been inputted (S103) .

The above single period corresponds to the one VOBU interval shown in FIG. 2.

Furthermore, it is assumed that when a video is recorded using the DVD-VR format, described with reference to FIG. 4, the recording is executed, for example, on the basis of a recording reservation already registered in the timer computer 19. Because of the various parameters set to prepare for recording as described in step S101, the main power supply is turned on, for example, about 15 to 5 seconds before the reserved time to execute reserved recording. Accordingly, the detection of the WSS, described in step S104, can be achieved before the actual time to start recording. Thus, with the reserved recording registered in the timer computer 19, a recording start line is shifted by one line in accordance with each step shown in FIG. 4 even if the WSS is superimposed on the VBI.

On the other hand, when a video is recorded using the DVD-VR format, described with reference to FIG. 4, if a channel to be recorded is switched at an arbitrary time using, for example, the remote controller or key input section 16, then the WSS is detected at intervals of one VOBU, shown in FIG. 2, as described above in step S104. Accordingly, even if the channel to be recorded at an arbitrary time, the output of unwanted images (white lines) is minimized if the WSS is superimposed on the VBI.

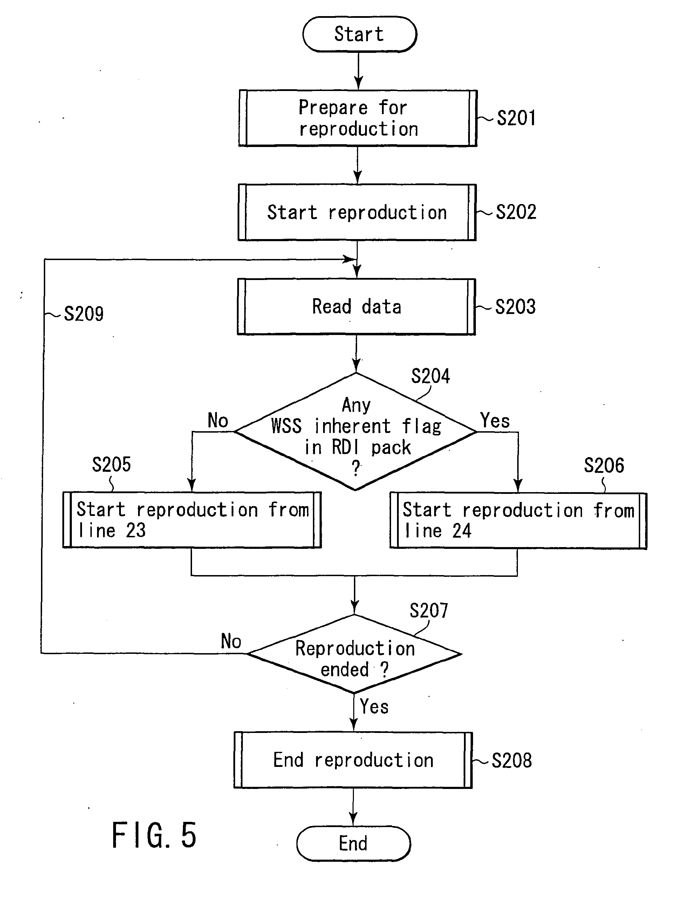

FIG. 5 is a flow chart illustrating an example of operations performed to reproduce a video using the DVD-VR format.

When the user instructs the apparatus to start reproduction, various parameters are set to prepare for reproduction (S201). The decoder 10 in FIG. 1 is caused to start reproduction (S202). Data is then read from the recording medium selected using the remote controller or the like (not shown), that is, the hard disk (HD) or the DVD-RAM disk M (S203).

Then, it is detected whether or not before reproduction, the RDI pack contains the flag inherent in the WSS (S204). Here, if the DSI_SS in FIG. 3 is 11(b), that is, the flag 11(b) is set, then the WSS is on. Otherwise the WSS is off.

If the WSS is on, reproduction (image output) is started with the line 23 (S205). In contrast, if the WSS is off (S204-Yes), reproduction (image output) is started with the line 24 (S206). The line to which the image is outputted can be easily changed by, for example, switching the output between the data for the line 23 and the data for the line 24 when transferring the reproduced data from the buffer 105 of the encoder 5 or the data processing section 7 to the decoder 10 or from the data processing section 7 to the decoder 10. If the WSS is off or undetectable, it may be outputted as black data when the data for the line 23 is outputted.

Then, it is determined whether or not an instruction on a stop has been given using the remote controller or the like (S207). If the stop command has been inputted, the reproduction is stopped (S208). If the stop command has not been inputted, the reproduction is continued to load data from the recording device again (S209). The reproduction of the image is thus continued.

In the above example, if the WSS is detected, not all of the line 23 is recorded or reproduced. However, it is also possible to avoid recording or reproduction from a horizontal synchronizing signal to the middle of the line.

Moreover, in the example shown in FIGS. 4 and 5, the flag inherent in the WSS is written in the RDI pack, and before reproduction, it is detected whether or not the flag is present to determine whether the WSS is on or off. However, WSS information other than that contained in the RDI pack can be recorded and reproduced by, for example, recording all of WSS detection data in MPEG2 user data and before reproduction, using the user data to make determination.

As described above, for the PAL system, the video recording apparatus according to the present invention shifts the effective recording start line by one line to the line 24.

On the other hand, to reproduce data in which the WSS is recorded, a reproducing device shifts the reproducing effective video start line by one line to the line 24.

With the above means, even if a video signal is recorded so that the WSS is superimposed on the VBI, no white lines appear during reproduction. Moreover, even if the WSS reproduces effective video data, reproduction can be achieved so that no white lines appear.

Even if a stream recorded according to the present invention is reproduced in another video reproducing apparatus, no white lines (unwanted images) are outputted to the effective video area of the image display section. Furthermore, if another video recording apparatus is used to record data in the recording medium and the video effective line contains WSS on the effective video area of the image display section, the reproducing apparatus according to the present invention does not reproduce any white lines (unwanted images).

Any WSS detecting method may be used provided that it can achieve accurate detections.

It is unnecessary to use a plurality of recording apparatuses as in the case of the present embodiment provided that the spirits of the present invention are achieved. Furthermore, the video recording and reproducing apparatus may have any configuration without departing from the spirits of the present invention. Moreover, any procedure other than the one used in the present embodiment may be used without departing from the spirits of the present invention.

The present invention is not limited to the above described embodiment. Arbitrary variations or changes may be made to the above embodiment without departing the spirits of the present invention. For example, in the above description of the embodiment, videos and sounds are recorded. However, it should be appreciated that equivalent operations and effects can be achieved even if only sounds are recorded. Furthermore, in the above description of the embodiment, the video recording and reproducing apparatus uses an optical disk (RAM disk) or hard disk as a recording medium. However, it should be appreciated that equivalent operations and effects can be achieved using, for example, a conventional video tape recorder provided that the video tape recorder has equivalent characteristics.

As described above, the present invention prevents unwanted images from being outputted to the effective video area of the image display section if the VBI information on which the WSS information is superimposed is inputted. This improves image quality obtained when a video program is reproduced.

The present invention is not limited to the embodiments described above and can be modified in various manners without departing from the spirit and scope of the invention.

## Claims

1. A video recording and reproducing apparatus (100) **characterized by** comprising:
a signal receiving section (101, 102) which receives a video signal or an audio signal;
an encode section (5) which encodes the video signal or the audio signal received by the signal receiving section into a predetermined form;
a recording device (8, 9) which records the video signal and management information for the video signal in a recording medium;
a control information signal detecting device (5, 6) which detects that a vertical blanking interval of the video signal received by the signal receiving section contains a control information signal that may be outputted to an effective video area; and
a recording control device (7, 18) which operates if the control information signal detecting device detects containment of the control information signal, to set a flag indicative of the containment of the control information signal in a predetermined area of a management information recording area of the recording medium.

2. The video recording and reproducing apparatus according to claim 1, **characterized in that** if the control information signal detecting device (5, 6) detects containment of the control information signal, when the video signal received by the signal receiving section is recorded in the recording medium, the recording control device (7, 18) encodes the video signal starting with a vertical blanking interval following the one containing the control information signal.

3. The video recording and reproducing apparatus according to claim 1, **characterized by** further comprising:
a control information signal recording section detecting device (5, 6) which detects whether or not the flag is present; and
a video signal decoding device which reproduces and decodes the video signal recorded in the recording medium,
wherein if the control information signal recording section detecting device detects the presence of the flag, when the video signal recorded in the recording medium is reproduced, the recording control device (7, 18) decodes the video signal starting with a vertical blanking interval following the one containing the control information signal.

4. A video recording and reproducing apparatus (100) according to claim 1, **characterized in that**
the recording control device (7, 18) operates if the control information signal detecting device (5, 6) detects containment of the control information signal to causes the recording device (8, 9) to record the video signal starting with a vertical blanking interval following the one containing the control information signal when the video signal to be recorded in the recording medium is outputted.

5. The video recording and reproducing apparatus according to claim 4, **characterized in that** if the control information signal detecting device (5, 6) detects containment of the control information signal, when the video signal received by the signal receive section is recorded in the recording medium, the recording control device (7, 18) encodes the video signal starting with the vertical blanking interval following the one containing the control information signal.

6. A video recording and reproducing apparatus **characterized by** comprising:
a signal receiving section which receives a video signal or an audio signal;
an encode section (5) which encodes the video signal or the audio signal received by the signal receiving section into a predetermined form;
a recording device (8, 9) which records the video signal and management information for the video signal in a recording medium;
a control information signal detecting device (5, 6) which detects that a vertical blanking interval of the video signal received by the signal receiving section contains a control information signal that may be outputted to an effective video area; and
a recording reservation information retaining section (9) which retains recording reservation information including a start and end of recording of the video signal in the recording medium as well as recording conditions which recording is executed by the recording device (8, 9) as well as recording conditions; and
a recording control device (7, 18) which operates if the control information signal detecting device (5, 6) detects containment of the control information signal when a main power supply is turned on by the recording reservation information retaining device, to set a flag indicative of the containment of the control information signal in a predetermined area of a management information recording area of the recording medium.

7. The video recording and reproducing apparatus according to claim 6, **characterized in that** if the control information signal detecting device (5, 6) detects containment of the control information signal, when the video signal inputted to the signal input section (101, 102) is recorded in the recording medium, the recording control device (7, 18) encodes the video signal starting with a vertical blanking interval following the one containing the control information signal.

8. A video recording and reproducing apparatus according to claim 6, **characterized in that** the recording control device (7, 18) operates if the control information signal detecting device (5, 6) detects containment of the control information signal to causes the recording device (8, 9) to record the video signal starting with a vertical blanking interval following the one containing the control information signal when the video signal to be recorded in the recording medium is outputted.

9. The video recording and reproducing apparatus according to claim 8, **characterized in that** if the control information signal detecting device (5, 6) detects containment of the control information signal, when the video signal received by the signal receive section is recorded in the recording medium, the recording control device (7, 18) encodes the video signal starting with the vertical blanking interval following the one containing the control information signal.

10. A video recording method **characterized by** comprising:
detecting a vertical blanking interval of a video signal received by the signal receiving section contains a control information signal that may be outputted to an effective video area; and
if it is detected that the vertical blanking interval of the received video signal contains the control information signal, setting a flag indicative of the containment of the control information signal in a predetermined area of a management information recording area of the recording medium.

11. A video recording method according to claim 10, **characterized in that**
the timing of detecting the vertical blanking interval of a video signal received by the signal receive section is turning on a main power supply on the basis of recording reservation information including a start and end of recording of the video signal in the recording medium as well as recording conditions.

12. A video recording method according to claim 10, **characterized in that**
when the video signal received by the signal receiving section is recorded in the recording medium, the recording control device (7, 18) encodes the video signal starting with a vertical blanking interval following the one containing the control information signal.

13. A video recording method according to claim 12, **characterized in that** when the video signal received by the signal receiving section is recorded in the recording medium, the recording control device (7, 18) encodes the video signal starting with a vertical blanking interval following the one containing the control information signal.

14. A video recording method according to claim 10, **characterized by** further comprising:
detecting whether or not the flag is present;
wherein
if detects the presence of the flag, when the video signal recorded in the recording medium is reproduced, the recording control device (7, 18) decodes the video signal starting with a vertical blanking interval following the one containing the control information signal.

15. A video recording method according to claim 11, **characterized by** further comprising:
detecting whether or not the flag is present;
wherein
if detects the presence of the flag, when the video signal recorded in the recording medium is reproduced, the recording control device (7, 18) decodes the video signal starting with a vertical blanking interval following the one containing the control information signal.
